# EUROPÄISCHE PATENTSCHRIFT

(11) **EP 2 478 757 B1**
(45) Veröffentlichungstag und Bekanntmachung des Hinweises auf die Patenterteilung: **08.11.2017**
(21) Anmeldenummer: 12158101.1
(22) Anmeldetag: 03.09.2010
(51) Int. Cl.: A01F 15/14, B30B 9/30, B65B 27/12

(54) **Ballenpresse**
Baling press
Presse à empaqueter

(43) Veröffentlichungstag der Anmeldung: 25.07.2012
(62) Teilanmeldung aus: 10009152.9
(73) Patentinhaber: Schwelling, Hermann, 88682 Salem (DE)
(72) Erfinder: Schwelling, Hermann, 88682 Salem (DE)
(74) Vertreter: Weickmann & Weickmann PartmbB

(56) Entgegenhaltungen:
- EP-A2- 0 084 620
- DE-A1- 2 460 464

## Beschreibung

Die Erfindung betrifft eine Ballenpresse zum Verdichten von losem Material und zum Verschnüren des verdichteten Materials zu Ballen sowie ein Verfahren zum Umschnüren von Ballen in selbiger. Sie findet Anwendung, wo loses Abfallmaterial für die Lagerung, den Transport und die Weiterverarbeitung zu Ballen gepresst werden.

Ballenpressen sind an sich bekannt und beispielsweise beschrieben in der DE 39 18 065 A1, der EP 1 190 618 B1 oder EP 1 785 351 A1 . Es sind verschiedene Bauarten von Ballenpressen verbreitet, darunter Kanalballenpressen, denen auch der Gegenstand der vorliegenden Anmeldung zuzuordnen ist. Die Bauart und die Größe der Ballenpresse richtet sich zu einem nach dem speziellen Anwendungsgebiet und zum anderen nach den räumlichen Gegebenheiten am Ort der Aufstellung der Ballenpresse.

In Betracht gezogen werden hier Ballenpressen so genannter horizontaler Bauart. Bei diesen Ballenpressen wird über einen Einfüllschacht von oben her besagtes Abfallmaterial in einen Presskasten gefüllt. Zwischen zwei Seitenwänden der Ballenpresse nebst des Presskastens ist, in horizontaler Ausrichtung betrachtet, auf einer Seite vom Presskasten eine vorbewegliche und zurückziehbare Pressplatte und gegenüberliegend ein Presskanal angeordnet. Die Pressplatte wird in der Regel mit einem hydraulischen Antrieb bewegt.

Das in den Presskasten eingefüllte Abfallmaterial wird mittels der Pressplatte durch den Presskasten hindurch in den an den Presskasten anschließenden Presskanal gepresst. Mit mehreren Presshüben wird aus dem jeweils eingefüllten, von der Pressplatte im Presskasten vorverdichteten Abfallmaterial im Presskanal ein aus mehreren Teilabschnitten zusammengesetzter Ballen geformt. Sobald der Ballen eine vorgegebene Ballenlänge hat oder nach einer vorgegebenen Anzahl von Presshüben, wird er mit wenigstens einem, in der Regel mit mehreren zueinander in Abstand angelegten Umschnürungsmaterial, oft Bindedraht, umschnürt.

Eine Kanalballenpresse mitsamt einer Vorrichtung zum Umschnüren von Ballen ist auch aus der DE 24 19 151 A1 bekannt.

Vor der Bildung des ersten Teilabschnittes wird / werden am Eingang des Presskanals eine offene Schlinge oder mit Abstand zueinander mehrere offene Schlingen aus Umschnürungsmaterial gelegt. Das Umschnürungsmaterial ist endlos und in Form von Rollen auf Bandvorratsstationen gelagert. Beim Einschieben der Teilabschnitte des Ballens in den Presskanal legt sich die Schlinge bzw. die Schlingen an den Außenumfang des gefertigten Ballens an. Jeweils nach Fertigstellung eines Ballens wird mit Hilfe von je einer Ziehnadel, die quer durch den Presskanal geschoben wird, Schnürmaterial von der einen Kanalwand zur anderen Kanalwand gezogen und sodann werden Abschnitte des so genannten Unterbandes und des so genannten Oberbandes miteinander verknotet oder verdrillt, derart, dass das Schnürmaterial straff am fertig gepressten Ballen anliegt; zugleich wird jeweils eine neue Schlinge gebildet; die alte Schlinge und die neue Schlinge werden durch Scheren voneinander getrennt. Zur problemlosen Hindurchführung der Ziehnadeln durch den Presskanal, Erfassen des Schnürmaterials und dem Durchziehen des jeweiligen Schnürmaterialabschnittes sind verschiedenste Vorrichtungen bekannt. In bevorzugter Ausführung sind Elemente dieser Vorrichtungen auch in den Frontbereich der Pressplatte integriert. Die Ziehnadeln werden in der Regel in einer Führungsvorrichtung geführt und gemeinsam angetrieben.

Rein kinematisch betrachtet arbeitet die Umschnürungsvorrichtung genannter Ballenpressen einwandfrei. In der praktischen Anwendung haben sich jedoch Störungen ergeben, da der verwendete Bindedraht sehr unterschiedlicher Qualität ist; aus wirtschaftlichen Gründen wird meist nur billiger Draht verwendet.

Aus den vorgenannten Gründen besteht in einer Reihe von Anwendungsfällen die Forderung, dass das Umschnürungsmaterial nicht metallisch sein soll, also ein Kunststoffband oder ein Garn verwendet werden muss. Kunststoffband oder Garn können nicht verdrillt werden. Die Enden der noch offenen Schlingen müssen miteinander verschweißt oder verknotet werden. Die Umschnürungsvorrichtungen der vorgenannten Ballenpressen sind hierfür weniger geeignet.

Für das Umschnüren mit Kunststoffband oder Garn eignen sich Ballenpressen nebst Umschnürungsvorrichtungen in einer Bauart, wie sie aus der DE 25 04 059 A1 , DE 27 28 203 A1 oder zum Beispiel aus der DE 25 40 452 bekannt sind. Für jeweils eine Umschnürung ist jeweils nur eine Bandrolle vorgesehen. Das Band/Garn wird vor dem Pressen von der Unterseite aus durch den Boden des Presskanals gezogen und an einer oberhalb der oberen Kanalwand an einer Laufkatze angeordneten Halterung festgelegt. Beim Pressen der Teilabschnitte eines Ballens im Presskanal wird hier statt einer U-förmigen offenen Schlinge eine L-förmige offene Schlinge je vorgesehener Umschnürung gelegt. Nach Fertigstellung der vorgegebenen Ballenlänge bzw. Erreichung einer vorgegebenen Anzahl von Presshüben wird mit jeweils einer Ziehnadel ein Band von unterhalb des Presskanals nach oberhalb des Presskanals gezogen. Das vor dem Pressen eines Ballens an der Laufkatze zeitweilig festgelegte Ende des Schnürmaterials wird nun mit dem anderen herausstehenden Abschnitt des Schnürmaterials verschnürt, sodass jeweils eine feste Umschnürung an den Ballen angelegt ist. Das frei werdende Ende des nach oberhalb des Presskanal gezogenen Abschnittes des Schnürmaterials wird vor dem Pressen eines weiteren Ballens an der Laufkatze befestigt.

Am Markt besteht einerseits stetig die Forderung, die Effizienz von Ballenpressen bezüglich des Arbeitsablaufes, des Wartungsaufwandes und der Arbeitskosten zu optimieren, andererseits besteht jedoch am Markt auch die Forderung, die für Ballenpressen nicht unerheblichen Investitionskosten zu senken. Also einerseits sollen die Funktionsvielfalt und Funktionssicherheit erhöht werden, andererseits Herstellungs-und Betriebskosten gesenkt werden. Zudem gibt es eine Vielzahl von Anwendungen, die ein Maximum für die Bauhöhe einer Ballenpresse vorgeben. In Funktionsräumen von üblichen Handelseinrichtungen, insbesondere solchen in sogenannten Altbau-Gebieten, beträgt die maximale Höhe 3m. Oft ist auch die Fläche begrenzt, sodass eine Ballenpresse eine möglichst geringe Stellfläche haben soll.

Vor diesem Hintergrund geht die Erfindung von einer Presse aus, bei der das Umschnürungsmaterial unterhalb des Pressenbodens dem Umschnürungsbereich der Ballenpresse zugeführt ist, also nur mit Unterbändern arbeitet. Hier liegt die Aufgabe zugrunde, eine Ballenpresse zu schaffen, bei der das Umschnüren der Ballen gegenüber Bekanntem insgesamt einfacher und sicherer erfolgt sowie der Aufwand für die Herstellung, für den Betrieb und für die Wartung betreffender Baueinheiten/Bauteile gegenüber bekannten Umschnürungen bei Ballenpressen geringer ist, zudem soll die räumliche Ausdehnung der Ballenpresse gering sein.

In diesem Zusammenhang ist aus der DE 2 460 464 A1 eine Umschnürungseinheit für die Ballen einer Ballenpresse bekannt, bei der die Ziehhaken zwar vertikal geführt sind, jedoch eine Drehung der Ziehhaken um ihre Längsachse möglich ist, da die Ziehhaken nicht nur das Hochziehen des Umschnürungsmaterials, sondern auch das Verdrillen der beiden losen Enden des Umschnürungsmaterials durch Rotation um ihre Längsachse vollziehen.

Ferner ist aus der EP 0 084 620 A2, die den nächstreichenden Stand der Technik bildet, ebenfalls eine Umschnürungseinheit für die Ballen an einer Ballenpresse bekannt, die jedoch keine Führung für die Ziehnadeln offenbart, und insbesondere keine eine Verdrehsicherung bietende Führung.

Die Aufgabe wird durch eine Ballenpresse mit den Merkmalen des Patentanspruches 1 gelöst. Die nachgeordneten Patentansprüche offenbaren Ausführungsvarianten und vorteilhafte Ausgestaltungen der Ballenpresse.

Die erfindungsgemäße Ballenpresse zum Verdichten von losem Material und zum Verschnüren des verdichteten Materials zu Ballen umfasst
- einen Presskasten, der eine Einfüllöffnung aufweist, durch die hindurch das lose Material in den Presskasten gelangt,
- einen ausgangsseitig des Presskastens in horizontaler Ausrichtung folgenden Presskanal,
- einen von einer Ausgangsstellung aus durch den Presskasten hindurch bis in die Nähe des Anfanges des Presskanals vor- und zurück beweglichen Pressstempel mit vertikalen Nuten (**38**) in der Frontfläche der frontseitig am Pressstempel (**36**) angeordneten Pressplatte (**37**),
- eine Umschnürungseinheit für das Umreifen des fertig gepressten Ballen mit Umschnürungsmaterial, wobei
   - die Umschnürungseinheit (**6**) eine auf der Oberseite angeordnete Bandziehstation (**8**) und eine dazu korrespondierend unter dem Boden der Ballenpresse (**39**) angeordnete Bandleitstation (**7**) umfasst,

- die Umschnürungseinheit außerhalb des Endabschnittes des Presskastens im Übergangsabschnitt (**2**a) zwischen dem Presskasten (**2**) und dem Presskanal (3) angeordnet ist, wobei
- die Lage der vertikalen Nuten (**38**) mit der Bewegungsichtung der Ziehnadeln (**10**) korreliert, wenn sich die Pressplatte (**37**) in der Ballenpresse (**1**) in ihrer vorderen Stellung befindet,
- im betreffenden Abschnitt Öffnungen in der Pressenoberseite für das Durchführen von Ziehnadeln der Umschnürungseinheit vorgesehen sind, wobei
- die Ziehnadeln der Umschnürungseinheit einzeln angetrieben werden,
- an den freien, zum Ergreifen des Umschnürungsmaterials (**20**) vorgesehenen Enden der Ziehnadeln (**10**) jeweils ein Kopfteil (**11**) angeordnet ist, wobei die Kopfteile (**11**) an ihrem freien Endabschnitt jeweils einen Fanghaken (**12**) aufweisen,
und ist dadurch gekennzeichnet, dass
- die an einem Führungsteil (**18**) der Bandziehstation (**8**) ausgebildete Gleitfläche (18a) und die jeweilige Führungsfläche am Kopfteil (**11**) zusammen eine Verdrehsicherung bilden,
- wobei die Länge der Gleitfläche (**18a**) so groß ist, dass das Kopfteil (**11**) bis zum Eintauchen in die jeweils führende Vertikalnut (**38**) der Pressplatte (**13**) verdrehsicher geführt ist und
- von dieser Position aus bis hinab zur unteren Position der Ziehnadel (**10**) die Sicherung gegen Verdrehen des Fanghakens (**12**) von der betreffenden vertikalen Nut (**38**) vorgenommen wird,
- sodass die an den Kopfteilen (**11**) vorgesehenen Fanghaken (**12**) von Anfang bis Ende ihrer Bewegung zum Heraufholen eines Abschnittes des Umschnürungsmaterials (**20**) stets eine definierte Lage einnehmen.
Näheres hierzu und zu den weiteren Baugruppen der Umschnürungseinheit wird weiter hinten in der Beschreibung näher erläutert.

Die neue Ballenpresse wird zum Verdichten von losem Material, wie vorzugsweise zum Pressen von Papier, Kartonage, Folien, expansive Schaumstoffe, Styropor, Hohlkörper, PET-Behälter, Blecheimer, Fässer und dergleichen Verpackungsmaterial eingesetzt. Sie findet Anwendung im Großhandel, Handel, Gewerbe, Logistikunternehmen, Zentralläger, der Papierindustrie, Druckereien, Industrieunternehmen, Entsorger und Verteilerzentren, also dort, wo loses Abfallmaterial für die Lagerung, den Transport und die Weiterverarbeitung zu Ballen gepresst werden.

Bei einer Ballenpresse genannter Gattung für das Umschnüren des in selbiger aus losem Abfallmaterial erzeugten Ballen ist verfahrensmäßig vorgesehen, dass vor dem Pressen jedes Ballens Umschnürungsmaterial, vorzugsweise Bandmaterial aus Kunststoff oder nichtmetallischen Stoffen vor die Frontfläche eines jeden zu erzeugenden Ballen Umschnürungsmaterial, im Weiteren vereinfacht Band genannt, positioniert wird. Das in einer Bandvorratsstation der Ballenpresse gelagerte Band wird vorzugsweise unterhalb des Bodens der Ballenpresse bzw. in einem seitlichen Bodenbereich an der Ballenpresse entlang bis zu einem Übergangsabschnitt der Ballenpresse geführt, in der deren Umschnürungseinheit vorgesehen ist. Diese Umschnürungseinheit arbeitet halbautomatisch. Und zwar im Sinne der Erfindung so, dass das Durchziehen des Bandes von der einen Seite zur anderen Seite der Ballenpresse, hier von deren Unterseite zur Oberseite, automatisch mit Bauteilen einer Bandziehstation und ihrer unten im Bodenbereich angeordneten Bandleitstation erfolgt und das Verknoten der Enden des Bandes nach Fertigstellung eines Ballens manuell durchgeführt wird, ebenso das Positionieren des Endes eines Abschnittes des Bandes an der Ballenpresse vor der Erzeugung eines Ballens. Je nachdem, wie viel Umschnürungen bei der Konzipierung der Ballenpresse vorgesehen werden, umfasst die Bandziehstation zwei oder weitere Hydraulikzylinder, die fest an einem Rahmen der Bandziehstation sind. Die ausfahrbaren Kolbenstangen dieser Hydraulikzylinder sind zugleich die Ziehnadeln der Bandziehstation. Dazu ist jeweils an dem freien Ende der Kolbenstange eines jeden Hydraulikzylinders ein Kopfteil vorgesehen, dessen freies Ende als Fanghaken ausgebildet ist.

Das freie Ende eines jeden von einer in einer Bandvorratsstation gelagerten Bandrolle abgezogenen Bandes wird über eine erste Bandführung und eine zweite Bandführung unterhalb und/oder seitlich des Bodens der Ballenpresse bis zu einer Bandleitstation geführt und dort fixiert. Diese Bandleitstation ist Bestandteil der Umschnürungseinheit; sie wird im Detail noch weiter hinten näher beschrieben.

Mit der bereits erwähnten Bandziehstation werden deren Ziehnadeln abgesenkt, bis deren freie Enden den Boden der Ballenpresse durchfahren haben und sich unterhalb des jeweiligen Kunststoffbandes befinden. In dieser Arbeitsposition befindet sich die frontseitig an einem Pressstempel angeordnete Pressplatte in ihrer vorderen, presskanalseitigen Position. Die vertikalen Nuten der Pressplatte sind dabei unterhalb der Ziehnadeln.

Sodann werden die Ziehnadeln wieder zurück in ihre obere Ausgangsposition, die Warteposition bewegt.

Dabei erfasst ein an jeder Ziehnadel vorgesehener Mitnehmer, ein Fanghaken, das jeweilige Band und zieht selbiges, unter Bildung einer offenen Schlaufe nach oben, bis die zwei Abschnitte der gebildeten v-förmigen Schlaufe des Bandes oberhalb des Presskanals bzw. des Presskastens sind.

Dann wird in der Schlaufenkrümmung nacheinander jedes Band durchschnitten. Der unterhalb des Bodens fixierte Abschnitt der ehemaligen Schlaufe fällt zurück, so dass er unterhalb des Bodens zu liegen kommt.

Der andere, zur Pressplatte hin gewandte Abschnitt der Schlaufe wird soweit nach oberhalb des Presskanals gezogen bis sein freies Ende hinter einer vorbestimmten Position außen auf der Oberseite des Presskanals liegt.

Diese Position entspricht in etwa der Länge eines im Presskanal gepressten Ballens. Diese Position definiert zugleich auch die Lage der Frontfläche eines fertig gepressten Ballens.

Oberhalb des Presskanals sind im Bereich der Durchführungen für das Umschnürungsmaterial Spannkörper in entsprechender Anzahl vorgesehen. Bei der Positionierung des außen liegenden Abschnittes ist der Spannkörper in einer Position "offen" und wird nach der Positionierung besagten Abschnittes geschlossen.

Im Spannkörper wird das Band geführt und nur so fest gehalten, dass es geführt gleiten kann und sich bei der durch das Pressen voranschreitenden Ballenbildung an dessen Oberseiten in einem straffen Zustand anliegt.

Mit einem oder mehreren Presshüben wird der erste Ballen gepresst, bis dessen Vorderfläche im Presskanal die besagte Position erreicht. Der Abschnitt, die Länge zwischen dieser Position und der Frontseite der Pressplatte ist die Länge eines Ballens. Diese Länge kann je nach Ausführung der Ballenpresse bzw. entsprechend des zu verpressenden Materials bzw. Materialsgemisch von Abfall durch den Bediener der Ballenpresse eingestellt werden oder sie ist in der Steuereinheit der Ballenpresse hinterlegt und wird während der Eingabe der Materialart des zu pressenden Abfalls an der Steuereinheit automatisch abgerufen.

Nach Erreichen dieses Verfahrensschrittes, der besagten Position, werden die Ziehnadeln wieder abgesenkt. Sie durchfahren jeweils eine vertikale Nut in der Pressplatte bis deren freie Enden unter dem Abschnitt des Bandes ist, der dort von unterhalb des Bodens zur inneren Bodenfläche des Presskanals überführt wird. Sodann werden die Ziehnadeln der Bandziehstation wieder in ihre Ausgangsposition zurück bewegt, dabei wird von jeder vorgesehenen Ziehnadel ein Band erfasst und mit nach oben genommen, wiederum unter Bildung einer Schlaufe. Nach Erreichen der oberen Position wird die gebildete Schlaufe in deren Umkehrung getrennt. Der nun freie eine Abschnitt wird durch einen ballenseitigen Schlitz in der Pressplatte hindurchgeführt und an die hintere, der Pressplatte zugewandten Fläche des Ballens angelegt und in seinem oberen Kantenbereich mit dem freien Ende des auf der Oberseite des Presskanals geführten Bandabschnittes verknotet.

Der andere, beim Trennen entstandene, zum Presskasten zeigende freie Abschnitt des Bandes wird wiederum, wie zuvor schon beschrieben, soweit nach oben herausgezogen bis dessen freies Ende hinter der besagten Position ist und wird mit dem Spannkörper geführt. Danach wird wieder mittels mehrerer Presshübe des Pressstempels ein neuer Ballen aus Abfallmaterial im Presskanal geformt und nach Erreichen der vorbestimmten Ballenlänge wie zuvor beschrieben umschnürt.

Für ein gutes Handling des Umschürungsmaterial beim Positionieren vor dem ersten Presshub und der Verknotung am fertig gepressten Ballen ist die unterhalb des Bodens angeordnete Bandleitstation speziell ausgebildet. Details werden weiter hinten noch näher erläutert. In einer neuen, erfinderischen Ausführung gehören zu dieser Bandleitstation ein Führungsstab und ein Befestigungsstab, die unter dem Boden der Ballenpresse im Bereich der Durchführungen für die Ziehnadeln angeordnet sind.

Die Erfindung wird nachstehend anhand von schematisch in Zeichnungen dargestellten Ausführungsbeispielen in Details und im Weiteren näher erläutert.

Es zeigen:
Figur **1** : eine neue Ballenpresse in einer perspektivischen Seitenansicht;
Figur **2** : einen Querschnitt durch die Umschnürungseinheit der Ballenpresse nach Figur **1**;Figur **2**a : Details der Umschnürungseinheit nach Figur **2**;
Figur **3**a bis **3**e : eine neue Anordnung der Zuführung von Umschnürungsmaterial als Unterband;
Figur **4****.****1** bis **4.16** : Arbeitsschritte für das Anlegen einer Umschnürung an einen in einer Ballenpresse nach Figur **1** gepressten Ballen.

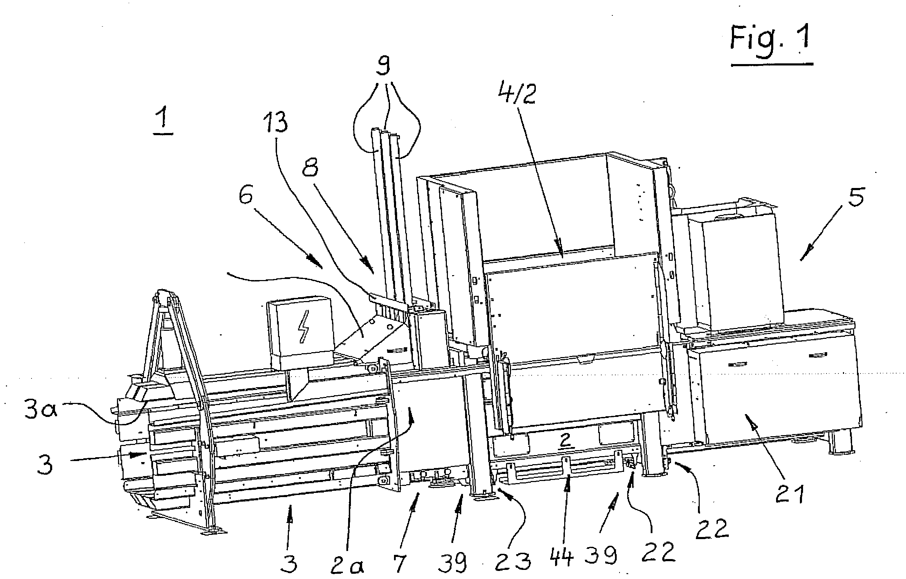

Die Figur **1** zeigt die neue Ballenpresse **1** in einer perspektivischen Seitenansicht. Sie umfasst unter anderem - in der Darstellung von rechts nach links gesehen in horizontaler Ausrichtung - einen Antriebsbereich **5**, einen daran anschließenden Presskasten **2**, an den sich dann ein Presskanal **3** anschließt. Oberhalb des Presskastens **2** ist eine Einfüllöffnung **4** vorgesehen, die hier als Einfüllschacht ausgebildet ist. Bei dem zwischen dem Presskasten **2** und dem Presskanal **3** vorgesehenen Übergangsabschnitt **2a** ist die Umschnürungseinheit der neuen Ballenpresse angeordnet. Sie besteht aus einer auf der Oberseite angeordneten Bandziehstation **8** und einer dazu korrespondierend unter dem Boden der Ballenpresse **39** angeordneten Bandleitstation 7. Die weiteren Bauteile der Bandziehstation **8** und der Bandleitstation **7** werden weiter hinten noch im Detail erläutert. Nach dem Stand der Technik sind die in einer Bandvorratsstation gelagerten Bandrollen unterhalb des Bodens der Ballenpresse gelagert. In Realisierung der anstehenden Aufgabe ist die Bandvorratsstation bei dieser neuen Ballenpresse seitwärts am Antriebsbereich vorgesehen. Von hier aus wird das Band mittels einer ersten Bandführung **22** und einer zweiten Bandführung **23** unterhalb des Bodens **39** bis zur Bandleitstation 7 geführt und wenn notwendig umgelenkt. Nahe der Bandvorratsstation **21** sind bei der gezeigten Ausführung zwei erste Bandführungen **22** vorgesehen. Hierdurch wird in dem Bereich der Ballenpresse, indem sich der Maschinenbediener oft und sehr nahe an der Ballenpresse aufhält, das Band genügend weit unter der Ballenpresse geführt werden kann. In diesem Abschnitt ist im Bodenbereich 39 und seitwärts an der Ballenpresse **1** ein Schutzblech vorgesehen, damit die dort geführten Umschnürungsbänder nicht mit den Füßen des Maschinenbedieners oder mit einem anderen Gegenstand, zum Beispiel einem Kehrbesen, beeinträchtigt werden.

Damit ein Maschinenbediener im automatischen Betrieb der Umschnürungsstation nicht in selbige fassen kann, ist dieser Bereich mit einer Schutzhaube **19** abdeckbar. Dort ist ein Sicherheitsschalter vorgesehen, sodass bei nichtberechtigtem Öffnen der Pressenbetrieb unterbrochen wird.

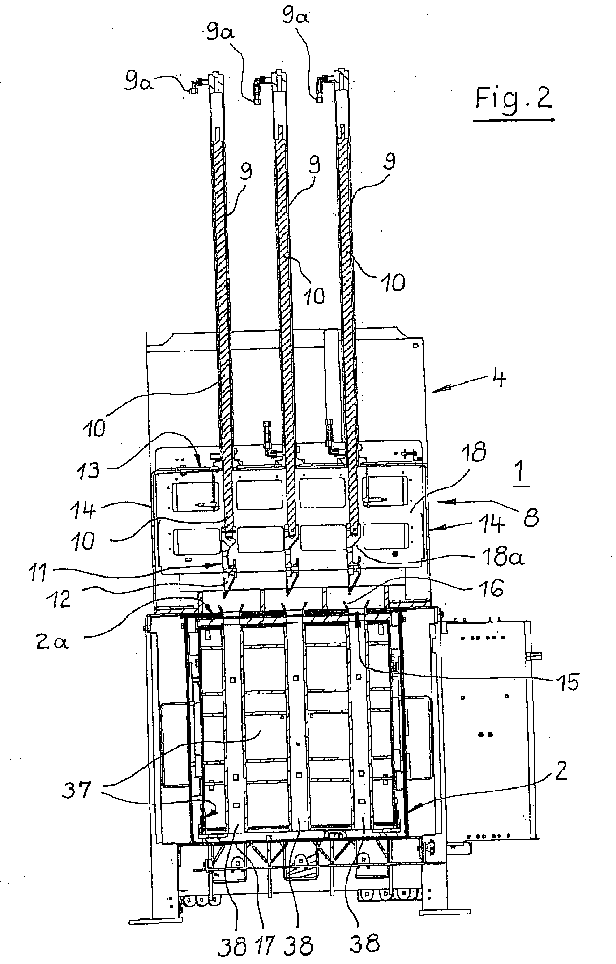

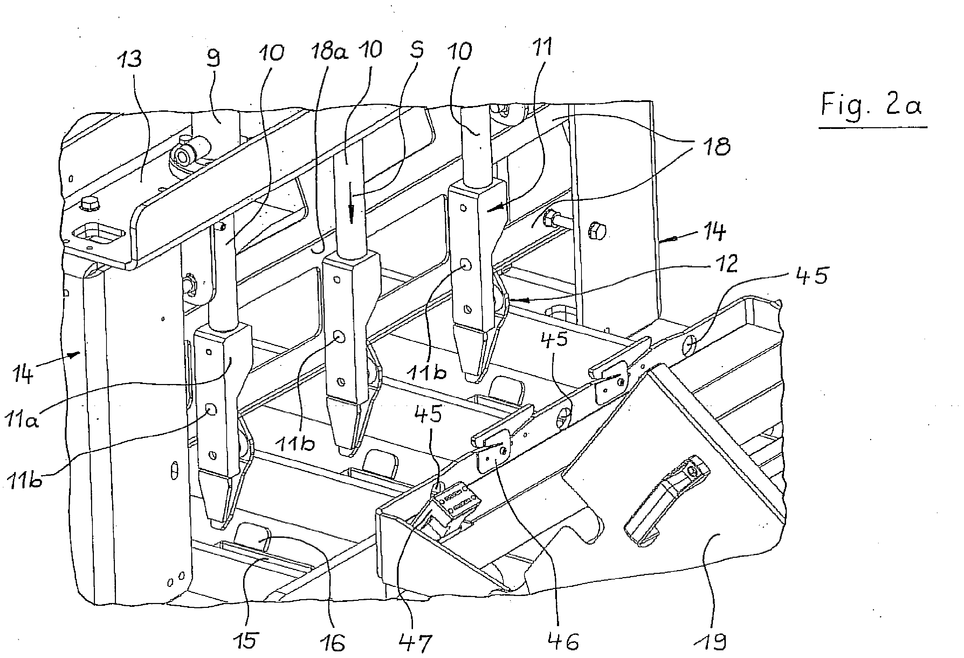

Mit der Figur 2 werden weitere Einzelheiten und Details der Umschnürungseinheit 6 gezeigt und erläutert. Die Pressplatte **37** der Ballenpresse **1** befindet sich in ihrer vorderen Stellung. Der erzeugte Ballen ist fertig gepresst und in dieser Ansicht zur besseren Übersichtlichkeit ausgeblendet. In der Frontfläche der Pressplatte **37** sind Vertikalnuten **38** vorgesehen, deren Lage mit der Bewegungsrichtung der Bandziehnadeln **10** korrelieren. Die Figur **2** ist ein Querschnitt durch den Übergangsabschnitt 2a in der Ebene der Bewegung der Bandziehnadeln. Auf der Oberseite der Ballenpresse **1** ist die Bandziehstation **8** angeordnet. Sie besteht aus den beiden Seitenteilen **14** und einer auf diesen Seitenteilen **14** abgestützten Traverse **13**. Auf der Traverse **13** sind die vorgesehenen Hydraulikzylinder **9**, hier drei Stück, fest angeordnet. In der Traverse sind entsprechend Durchgangsbohrungen vorgesehen, durch die hindurch die Kolbenstangen der Hydraulikzylinder **9**, die Ziehnadeln **10,** während deren Abwärts- bzw. Aufwärtsbewegung hindurch treten können. An den freien Enden der Kolbenstangen/Ziehnadeln **10** sind Kopfteile **11** vorgesehen. Diese Kopfteile haben an ihren freien Endabschnitten jeweils einen Fanghaken **12**. Das Kopfteil **11** und der Fanghaken **12** können ein- oder mehrteilig sein. In dem Rahmen der Bandziehstation **8** ist zwischen den Seitenteilen **14** ein Führungsteil **18** vorgesehen. Korrespondierend zur Lage der Kopfteile und deren Bewegungsbereich sind Abschnitte des Führungsteiles **18** als Gleitflächen **18**a gestaltet. Korrespondierend zur Lage der Gleitfläche **18** ist die zur Frontseite **11**a der Kopfteile **11** entgegen gesetzte Seite/Fläche der Kopfteile **11**, also die, die gegen die Pressrichtung zeigt, als Führungsfläche ausgebildet. Vorzugsweise sind die Kopfteile **11** quaderförmig, können jedoch auch jede andere Form haben, wichtig dabei ist jedoch nur, dass die zur Gleitfläche 18a zeigende Seite des Kopfteiles **11** einen ebenen Flächenabschnitt besitzt, zwecks Führung an der betreffenden Gleitfläche **18**a. Die Führungsfläche am Kopfteil **11** und die Gleitfläche **18**a bilden zusammen eine Verdrehsicherung. Dadurch ist erreicht, dass die an den Kopfteilen **11** vorgesehenen Fanghaken **12** von Anfang bis Ende ihrer Bewegung zum Heraufholen eines Abschnittes des Bandes **20** stets eine definierte Lage einnehmen. Die Länge der Gleitfläche **18**a ist so, dass bis zum Eintauchen der Kopfteile **11** in die jeweils führende Vertikalnute **38** der Pressplatte **13** selbige **11** verdrehsicher geführt ist. Von dieser Position aus bis hinab zur unteren Position der Ziehnadel wird die Sicherung gegen Verdrehen des Fanghaken **12** von der betreffenden Vertikalnut **38** vorgenommen. Damit jede Ziehnadel **10** in die betreffende Vertikalnut **38** störungsfrei eintauchen kann, ist im Übergangsabschnitt **2a** an der Oberseite der Ballenpresse **1** jeweils eine Öffnung **15** vorgesehen und im Boden **39** eine Durchführung **17**. Unterhalb des Bodens **39** und unter den Durchführungen **17** liegt ein Führungsstab **24**, der unten angeordneten Bandleitstation **7**, die später noch in weiteren Details erläutert wird. Zu sehen ist auch die zweite Bandführung **23**. In bevorzugter Ausführung sind an der ersten Bandführung **22**, der zweiten Bandführung **23** und dem Führungsstab **24** entsprechend der vorgesehenen Anzahl von Umschnürungsbändern Keramikhülsen vorgesehen. Die Keramikhülsen dienen der Führung und der Umlenkung des jeweiligen Bandes. Am Eingang der Öffnungen **15** sind zueinander beabstandet jeweils zwei Führungslaschen **16** vorgesehen, mit denen das Einfädeln der Kopfteile **11** in die jeweilige Vertikalnut **38** erleichtert wird. Zugleich wird mit diesen Führungslaschen **16** verhindert, dass die in der Regel spitzwinklig ausgebildeten Enden der Kopfteile beim Hindurchführen durch die über der jeweiligen Vertikalnut angeordneten Öffnung **15** beschädigt werden.

Die Figur **2**a zeigt weitere Details der Bandziehstation **8**. In jedem Kopfteil **11** ist eine Durchgangsbohrung **11**b vorgesehen. In der Ausgangsposition der Kopfteile **11,** also in deren Ruhelage, fluchten die Durchgangsbohrungen **11** b jedes vorgesehenen Kopfteiles **11** zueinander. Seitwärts der außen liegenden Kopfteile **11** ist eine optische Sensoreinheit, zum Beispiel eine Lichtschranke mit einem Empfänger und einem Sender angeordnet. Diese Lichtschrank bzw. deren Bauteile sind im Stand der Technik bekannt und daher hier nicht weiter zeichnerisch dargestellt. Sie sind bezüglich der Lage der Kopfteile **11** so angeordnet, dass nur dann, wenn alle vorgesehenen Kopfteile **11** sich in ihrer Ausgangsposition und Ruheposition befinden, vom Sender ein Signal zum Emfpänger gelangt und von diesem ein Schallsignal erzeugt wird. Erst wenn ein solches Schallsignal vorhanden ist, wird der Antrieb der Pressplatte freigegeben, sodass ein Presshub ausgeführt werden kann.

Zur Umschnürungseinheit **6** gehören auch noch nahe der an der Oberseite der Ballenpresse **1** vorgesehenen Öffnungen **15** gelegene Führungslöcher **45**, hier entsprechend der vorgesehenen Anzahl von drei Bändern drei Stück. Diese Führungslöcher **45** dienen der zeitweiligen Festlegung der Enden des jeweiligen Bandabschnittes. Hierzu wird weiter hinten noch Näheres ausgeführt. In Nähe dieser Führungslöcher **45** sind ein oder mehrere Schneidelemente **46** angeordnet, mit denen jeweils eine von der Unterseite der Ballenpresse nach oben gezogene sogenannte Bandschlaufe aufgeschnitten werden kann, sodass das eine Ende zum Verknoten mit dem weiteren Ende des einen fertig gepressten Ballen angelegten Bandes erfolgen kann. Der in dieser Ansicht zu sehende Sicherheitsschalter der Schutzhaube **19** trägt hat das Bezugszeichen **47.**

In den Figuren **1****,** **2** und **2a** sind an sich bekannte und zum zumindest teilautomatischen Betrieb einer Ballenpresse notwendige weitere, bekannte Bauteile, je ein Hydraulikmotor, eine Steuerung für die Hydraulik, eine Steuerung für die elektrisch angetriebenen Teile der Ballenpresse sowie die elektronische Steuereinheit nicht dargestellt bzw. nicht mit einem Bezugszeichen versehen, da diese in der üblichen Anzahl und mit ihrer üblichen Funktion vorgesehen sind und hier daher nicht weiter beschrieben werden müssen.

In dieser Darstellung ist - von rechts nach links gesehen - im Übergangsbereich **2**a von ihrem Presskasten **2** zu ihrem Presskanal **3** eine Umschnürungseinheit **6** vorgesehen, wobei deren Bandziehstation **8** im Wesentlichen über dessen oberen Wand und deren Bandleitstation **7** unterhalb von dessen Boden **39** positioniert ist.

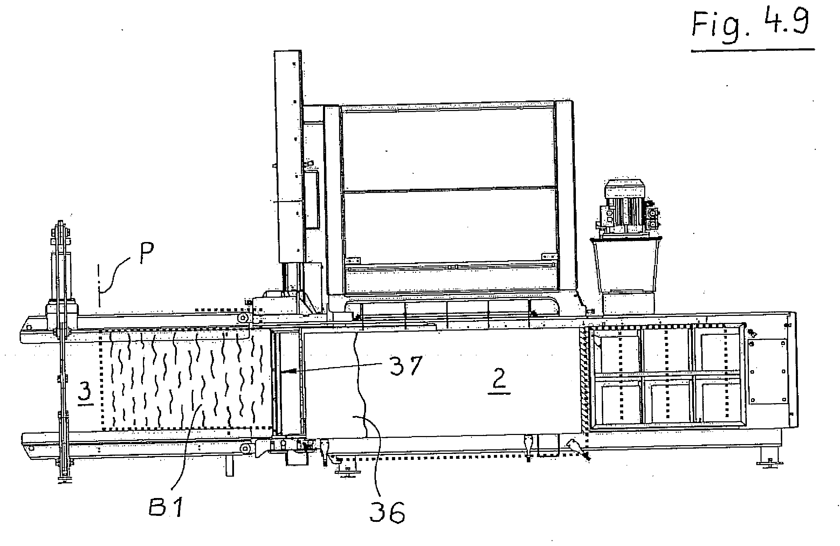

Die Figur **2** zeigt die Bandziehstation **8** und deren Ziehnadeln **10** in einer Warteposition. Mit dem Bezugszeichen S ist die Bewegungsrichtung markiert, in der sich die Ziehnadeln **10** zum Erfassen des Umschnürungsmaterials **20** bewegen. Sobald in dem Presskanal **3** ein Ballen (vgl. Figur **4.9**) mit einer vorgegebenen Ballenlänge erzeugt ist bzw. nach Erreichen einer Anzahl vorgegebener Presshübe bleibt der Presstempel **36** eingangs des Presskanals 3 in einer vorderen, der Endstellung eines Presshubes zeitweilig stehen, so dass auf das zu einem Ballen zusammengepresste Abfallmaterial noch Druck ausgeübt wird (vgl. Figur **4.9**).

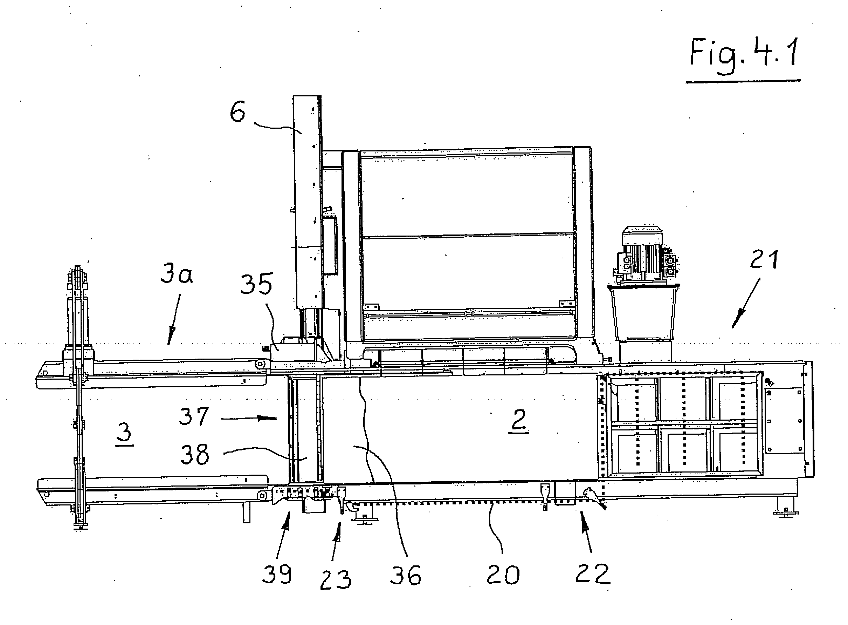

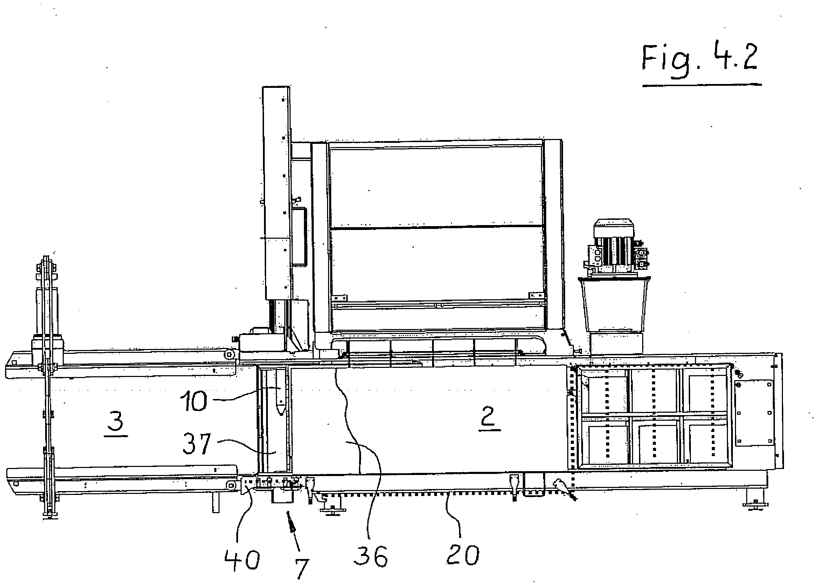

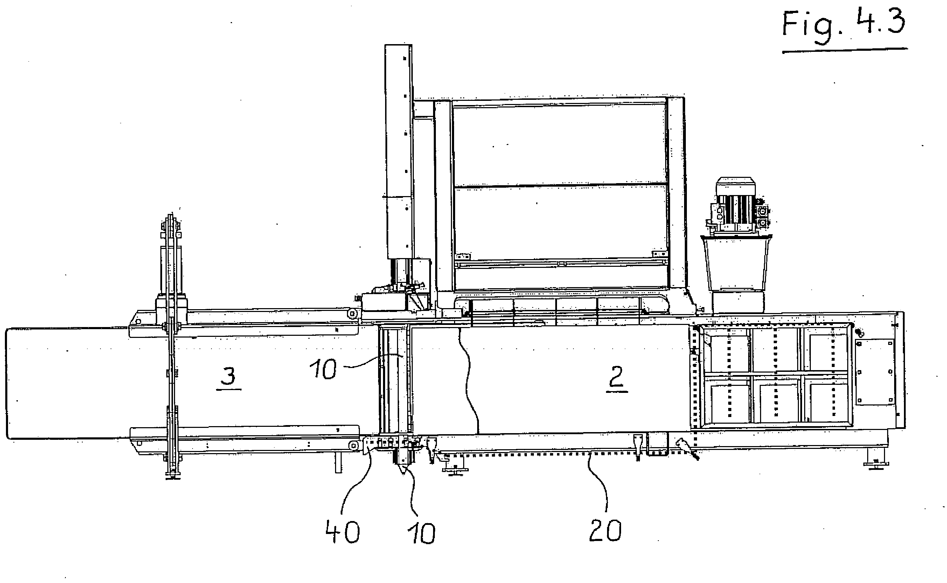

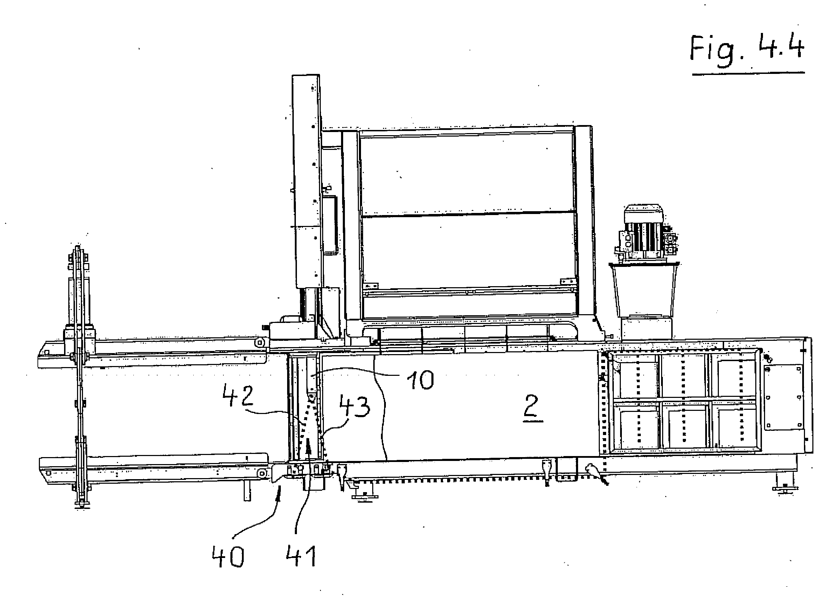

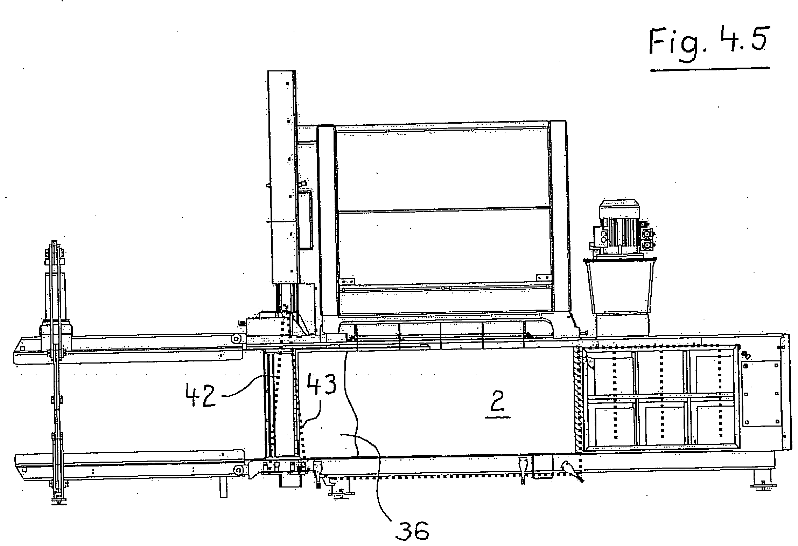

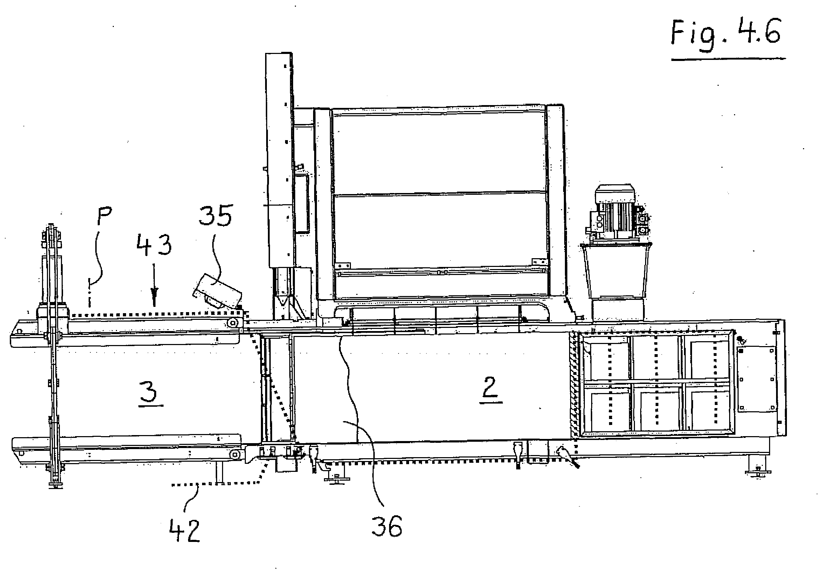

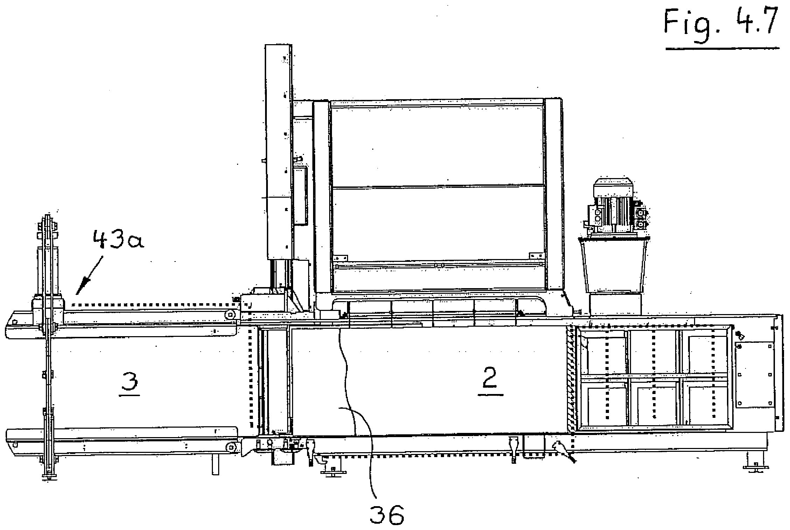

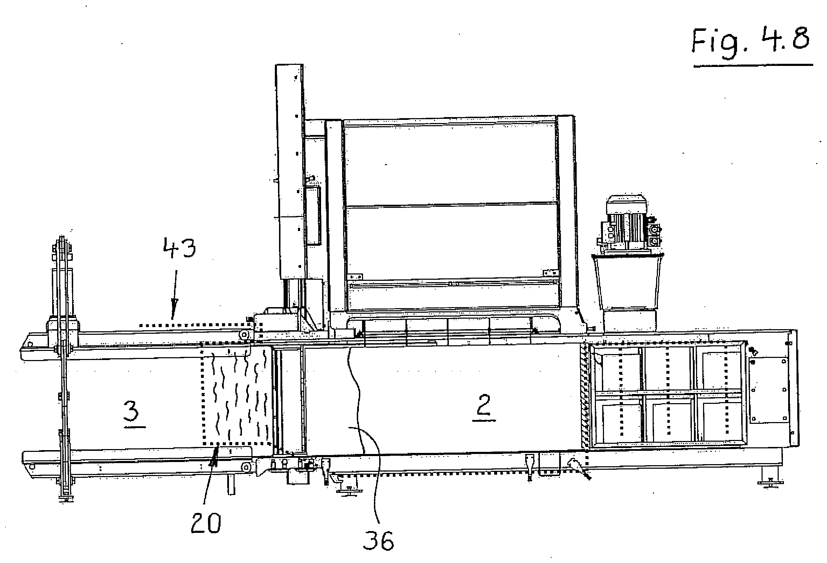

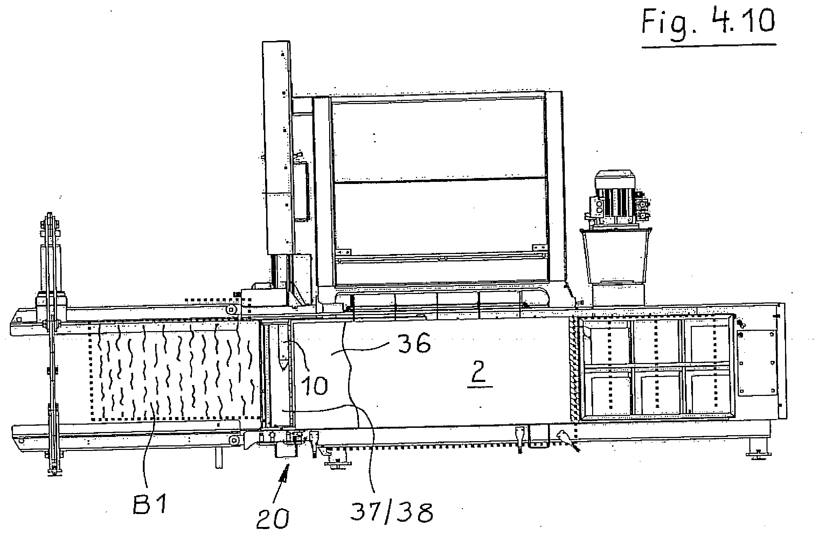

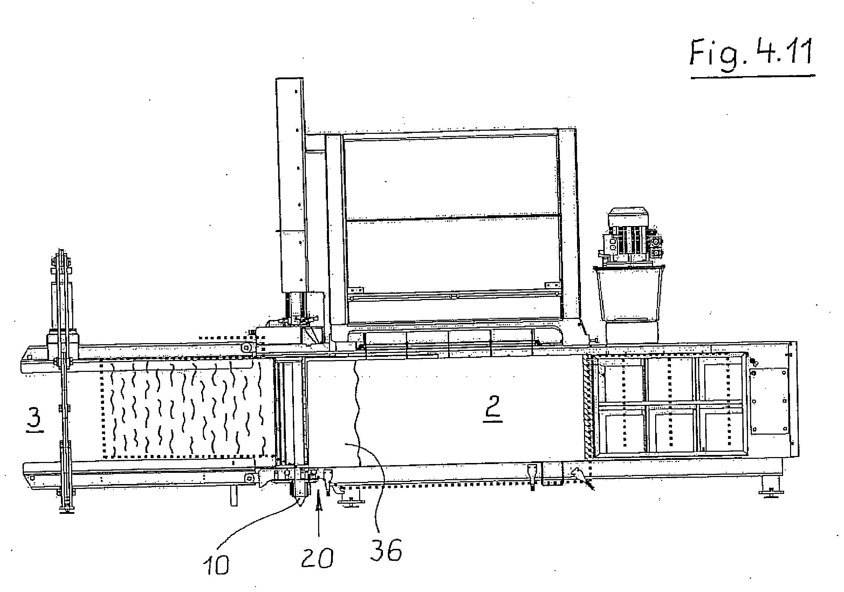

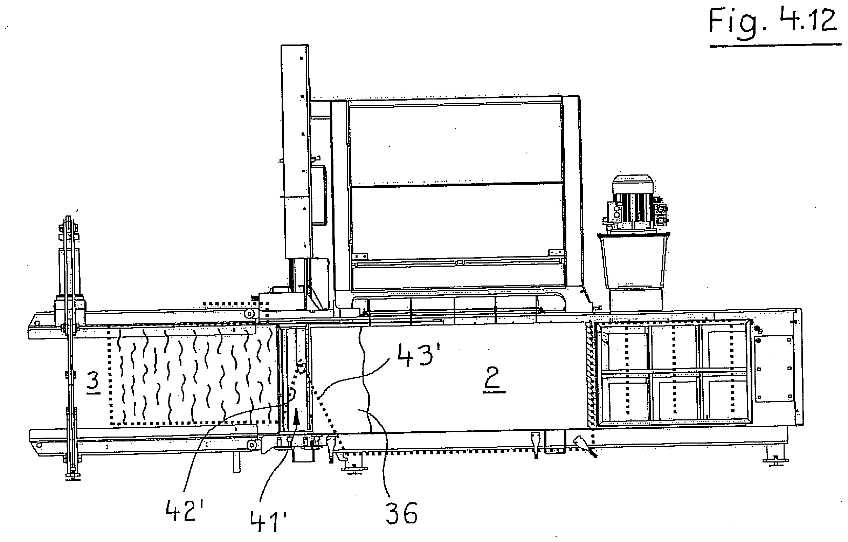

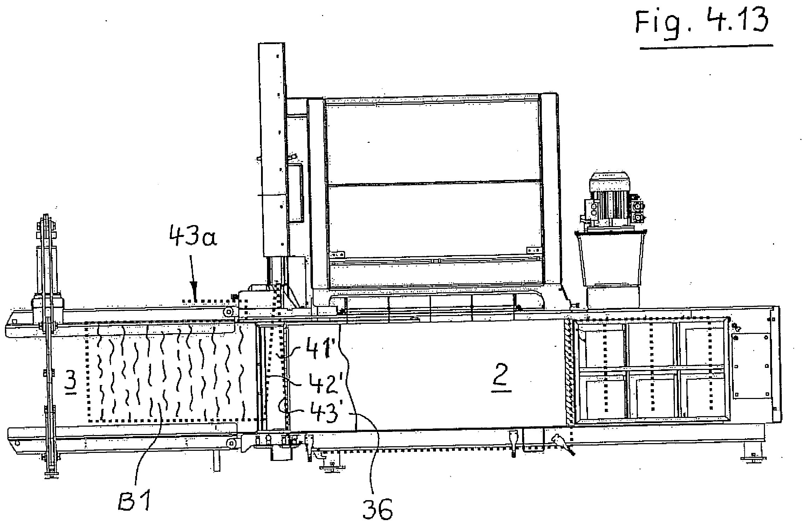

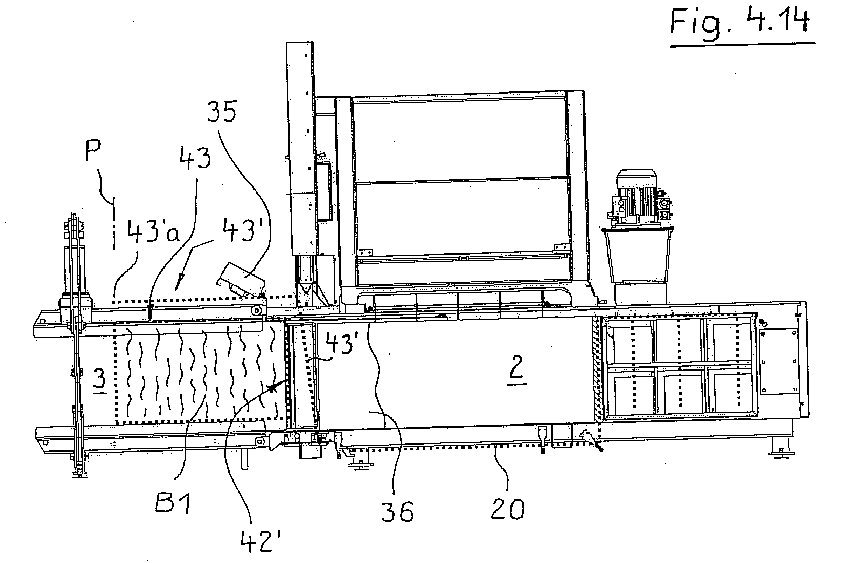

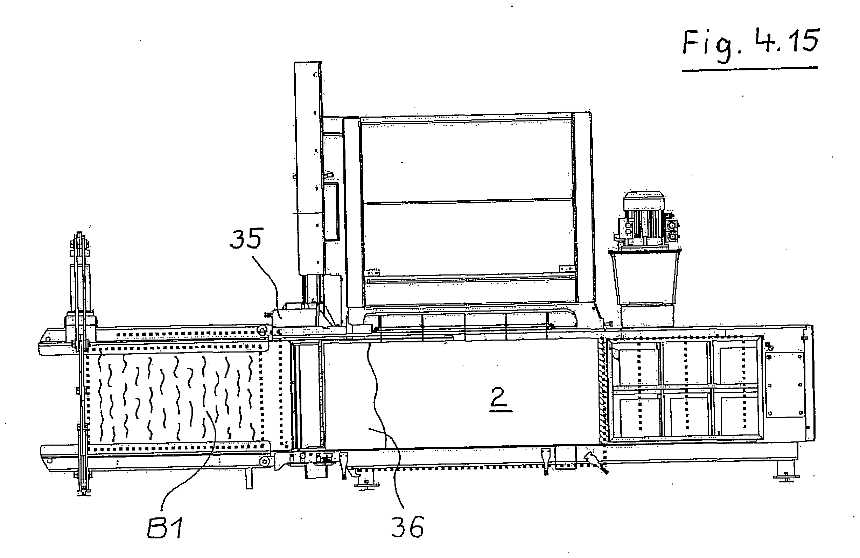

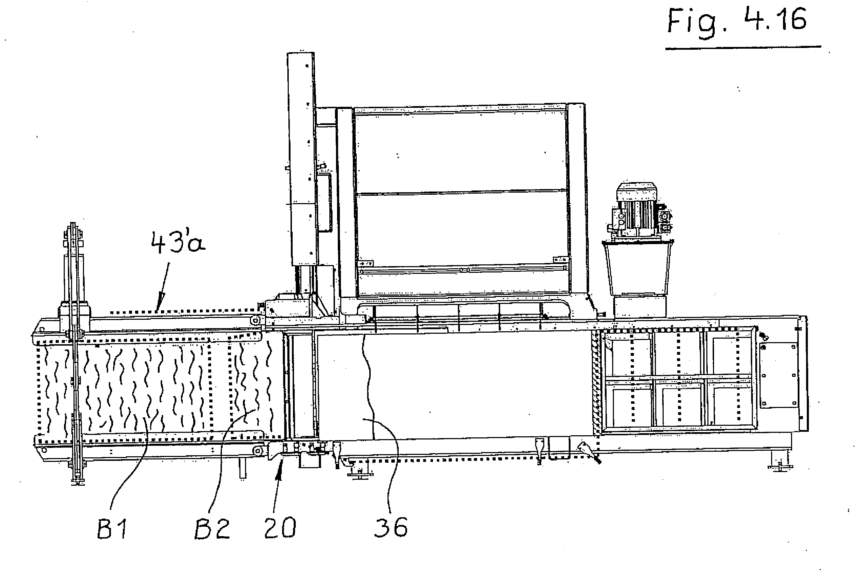

Die mittels den Ziehnadeln **10** nach oben gezogenen Abschnitten des Umschnürungsmaterials **20** werden dann mit dem an der Oberseite des geformten Ballens anliegendem Abschnitt des Umschnürungsmaterials **20** verbunden; die Details hierzu werden weiter hinten in Verbindung mit den Darstellungen in den Figuren **4****.****1** bis **4.16** noch im Einzelnen erläutert.

Die in den Figuren der Anmeldung verwendeten Bezugszeichen haben jeweils die gleiche Bedeutung, auch wenn sie nicht in der Beschreibung zu jeder Figur ausdrücklich genannt sind.

Die Arbeitsschritte für das Positionieren des Umschnürungsmaterials **20** an der Ballenpresse **1** vor dem Ausführen des ersten Presshubes, für das Umschnüren eines Ballens B sowie für das Positionieren des Umschnürungsmaterials **20** vor dem ersten Presshub zur Herstellung eines weiteren Ballens B sind in den Figuren **4****.****1** bis **4.16** schematisiert dargestellt.

Gemäß Figur **4****.****1** ist das Umschnürungsmaterial in einer Bandvorratsstation **21** gelagert, die, in diesem Ausführungsbeispiel, seitlich des Antriebsbereiches 5 der Ballenpresse **1** ist. Hier wird als Umschnürungmaterial ein Kunststoffband **20** verwendet, wobei dieses Kunststoffband **20** einen flachen, im wesentlichen rechteckigen Querschnitt hat, jedoch nicht auf diesen Querschnitt festgelegt ist. Der Querschnitt des Umschnürungmaterials kann rund sein, elyptisch, halbrund oder eine andere Querschnittsform besitzen. Das freie Ende **40** eines Kunststoffbandes **20** wird von der in der Bandvorratsstationen **21** gelagerten Bandrolle abgezogen und über eine erste Bandführung **22** und eine zweite Bandführung **23** unterhalb und/oder seitlich des Bodens **39** der Ballenpresse **1** bis zu einer Bandleitstation **7** geführt und dort fixiert, vgl. hierzu Figuren **4****.****1** und **4.2**. Diese Bandleitstation 7 ist Bestandteil der Umschnürungseinheit **6**; sie wird im Detail noch weiter hinten beschrieben.

Mit der bereits weiter vorn erwähnten Bandziehstation **8** werden die Ziehnadeln **10** abgesengt, bis deren freie Enden den Boden **39** der Ballenpresse **1** durchfahren haben und sich unterhalb des Kunststoffbandes **20** befinden. Wie bereits erwähnt, befindet sich jetzt die frontseitig an einem Pressstempel **36** angeordnete Pressplatte **37** in ihrer vorderen, presskanalseitigen Position. Die vertikalen Nuten **38** der Pressplatte **37** sind dabei unterhalb der Ziehnadeln **10.** Sodann werden die Ziehnadeln **10** wieder zurück in ihre Ausgangsposition, die Warteposition bewegt, vgl. Figuren **4.4** bis **4.7**. Dabei erfasst ein an jeder Ziehnadel vorgesehener Mitnehmer das jeweilige Kunststoffband **20** und zieht selbiges, unter Bildung einer offenen Schlaufe **41** nach oben, bis Abschnitte **42, 43** der gebildeten v-förmigen Schlaufe **41** von Kunststoffband **20** oberhalb des Presskanals **3** bzw. des Presskastens **2** sind.

Dann wird in der Schlaufenkrümmung das Kunststoffband **20** durchschnitten. Der unterhalb des Bodens **39** fixierte Abschnitt **42** der ehemaligen Schlaufe **41** fällt zurück, so dass er unterhalb des Bodens **39** zu liegen kommt, vgl. Figur **4.6****.**

Der andere, zur Pressplatte **37** hin gewandte Abschnitt **43** der Schlaufe **41** wird soweit nach oberhalb des Presskanals **3** gezogen bis sein freies Ende **43a** hinter einer Position P liegt, vgl. Figuren **4.6** und **4.7**.

Diese Position P entspricht in etwa der Länge eines im Presskanal **3** gepressten Ballens. Die Position P definiert zugleich auch die Lage der Frontfläche eines fertig gepressten Ballens B.

Oberhalb des Presskanals **3** sind im Bereich der Durchführungen für das Umschnürungsmaterial Spannkörper **35** in entsprechender Anzahl vorgesehen. Bei der Positionierung des Abschnittes **43** ist der Spannkörper **35** in einer Position "offen" und wird nach der Positionierung besagten Abschnittes **43** geschlossen.

Im Spannkörper **35** wird das Kunststoffband **20** geführt und nur so fest gehalten, dass es in einem straffen Zustand geführt ist, vgl. Figur **4.7****.**

Mit mehrere Presshübe wird sodann der erste Ballen B **1** gepresst, bis dessen Vorderfläche im Presskanal **3** die Position P erreicht. Der Abschnitt, die Länge zwischen dieser Position P und der Frontseite der Pressplatte **37** ist die Länge eines Ballens B. Diese Länge kann je nach Ausführung der Ballenpresse bzw. entsprechend des zu verpressenden Materials bzw. Materialsgemisch von Abfall durch den Bediener der Ballenpresse eingestellt werden oder sie ist in der Steuereinheit der Ballenpresse **1** hinterlegt und wird während der Eingabe der Materialart des zu pressenden Abfalls an der Steuereinheit automatisch abgerufen.

Nach Erreichen diesen Verfahrensschrittes, vgl. Figur **4.9**, werden die Bandziehnadeln **10**, vgl. Figur **4.10**, wieder abgesenkt. Sie durchfahren jeweils eine vertikale Nut **38** in der Pressplatte **37** bis deren **10** freie Enden unter dem Abschnitt des Kunststoffbandes **20** ist, der dort von unterhalb des Bodens **39** zur inneren Bodenfläche des Presskanals **3** überführt wird, vgl. Figur **4.11**. Sodann werden die Bandziehnadeln **10** von der Bandziehstation 8 wieder in ihre Ausgangsposition zurück bewegt, dabei wird von jeder vorgesehenen Ziehnadel 10 ein Kunststoffband **20** erfasst und mit nach oben genommen, wiederum unter Bildung einer Schlaufe, die hier das Bezugszeichen **41**' hat, mit deren Abschnitten **42**' und **43**'. Nach Erreichen der oberen Position wird die gebildete Schlaufe **41**' in deren Umkehrung getrennt. Der nun freie Abschnitt **42**' wird durch einen ballenseitigen Schlitz in der Pressplatte **37** (hier nicht dargestellt) hindurchgeführt und an die hintere, der Pressplatte **37** zugewandten Fläche des Ballens **B1** angelegt und in seinem oberen Kantenbereich mit dem freien Ende **43**a des Bandabschnittes **43** verknotet bzw. verdrillt, je nachdem welche Art das Umschnürungsmaterial ist.

Der zum Presskasten **2** zeigende Abschnitt **43**' wird wiederum, wie zuvor schon beschrieben, soweit nach oben herausgezogen bis dessen freies Ende **43**'a hinter der Position P ist und wird mit dem Spannkörper geführt, vgl. Figuren **4.14** und **4.15****.** Danach wird mittels mehrerer Presshübe des Pressstempels **36** ein neuer Ballen **B2** aus Abfallmaterial im Presskanal 3 geformt, vgl. Figuren **4.15** und **4.16**.

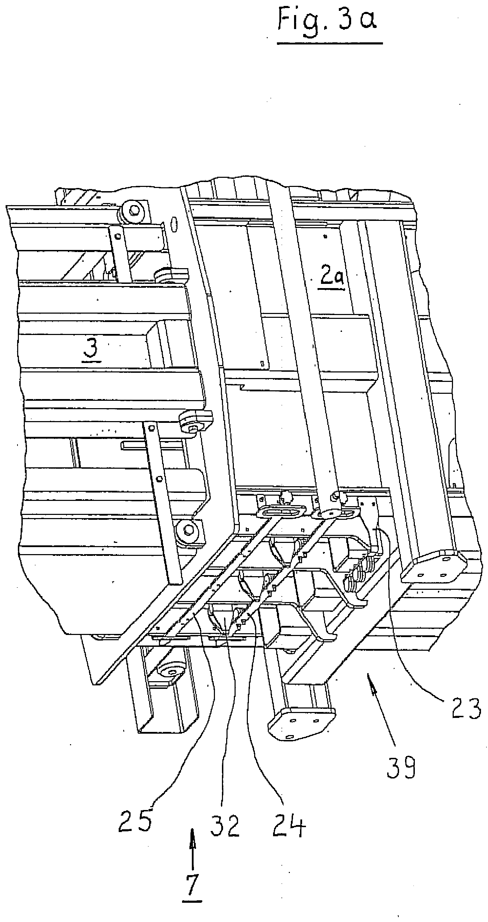

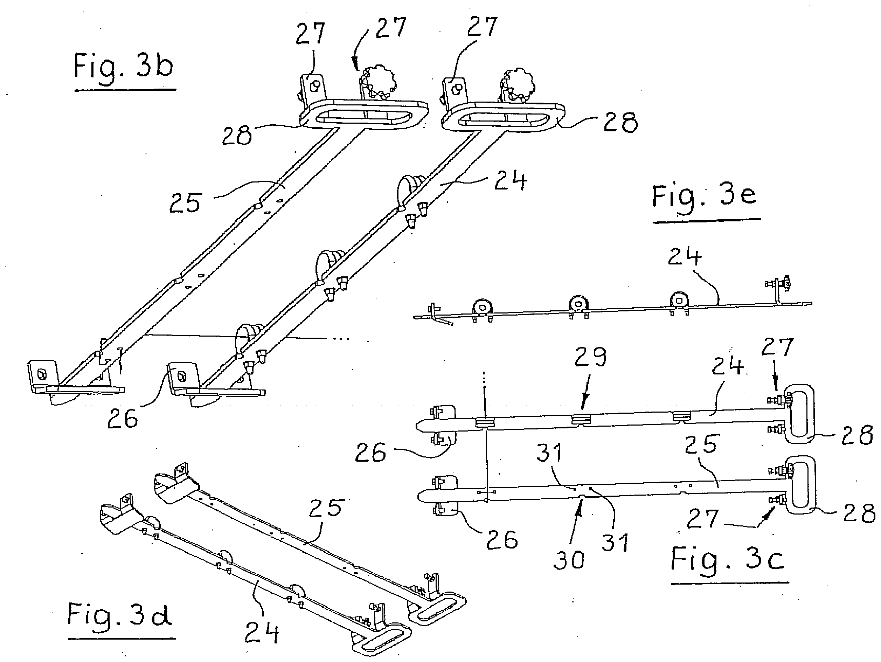

Für ein gutes Handling des Umschürungsmaterial beim Positionieren vor dem ersten Presshub und der Verknotung am fertig gepressten Ballen B ist die unterhalb des Bodens **39** angeordnete Bandleitstation **7** speziell ausgebildet, die Details hierzu sind in den Figuren **3a****,** **3b, 3c, 3d** und **3e** in verschiedenen Ansichten gezeigt. In einer neuen, erfinderischen Ausführung gehören zu dieser Bandleitstation **7** ein Führungsstab **24** und ein Befestigungsstab **25**, die unter dem Boden **39** der Ballenpresse **1** im Bereich der Durchführungen für die Ziehnadeln **10** angeordnet sind.

Der Führungsstab **24** ist zum Presskasten **2** hin und der Befestigungsstab **25** zum Presskanal **3** hin ausgerichtet sowie quer zur Vorschubrichtung des Presstempels **36** unter dem Boden **39** lösbar befestigt. Hierzu ist auf der einen Seite des Bodens **39** jeweils ein Rastteil **26** befestigt. Der Führungsstab **24** sowie der Befestigungsstab **25** haben an ihrem einen Ende einen Griff 28 sowie zwei aufwärts gerichtete Laschen **27**, das gegenüberliegende Ende der beiden Bauteile **24**, **25** ist frei. Diese freien Enden werden zum Festlegen jeweils in eines der Restteile **26** gesteckt und mit ihrem anderen Ende mittels den Laschen **27** auf der anderen Seite des Bodens **39**, vgl. hierzu Figur **1**, lösbar befestigt. Dabei wird eine der Laschen **27** auf einen am Korpus der Ballenpresse vorgesehenen Bolzen gesteckt und sodann die in der zweiten Laschen **27** gehaltene Gewindeschraube am Korpus festgelegt.

Der Führungsstab **24** besitzt zudem Führungsringe **29**, durch die das von der zweiten Bandführung **23** kommende Kunststoffband **20** hindurchgeführt wird, um dessen Ende **40** an einer Kerbe **30** und Bohrungen **31** des Befestigungsstabes **25** zu fixieren. Zwischen dem Führungsstab **24** und dem Befestigungsstab **25** sind am Boden **39** im Bereich der Durchgänge für die Ziehnadeln **10** Führungslaschen **32** angeordnet, mit denen das Kunststoffband **20** in einer Position geführt wird, die das Erfassen von selbigem durch die freien Enden der Ziehnadeln **10** erleichtert.

### Bezugsziffernverzeichnis:

- **1** :: Ballenpresse
- **2** :: Presskasten
- **2**a **:**: Übergangsabschnitt
- **3 :**: Presskanal
- **3** a :: obere Wand von Pos. **3**
- **4** :: Einfüllöffnung
- **5** :: Antriebsbereich
- **6** :: Umschnürungseinheit
- **7** :: Bandleitstation
- **8** :: Bandziehstation
- **9** :: Hydraulikzylinder
- **9**a :: Hydraulikleitungen
- **10** :: Ziehnadeln
- **11** :: Kopfteile
- **11**a :: Frontseite
- **12** :: Fanghaken
- **13** :: Traverse
- **14** :: Seitenteile
- **15** :: Öffnungen
- **16** :: Führungslaschen
- **17** :: Durchführungen
- **18** :: Führungsteil
- **18a** :: Gleitflächen
- **19** : **20** :: Umschnürungsmaterial (Kunststoffband)
- **21** :: Bandvorratsstation
- **22** :: erste Bandführung
- **23** :: zweite Bandführung
- **24** :: Führungsstab
- **25** :: Befestigungsstab
- **26** :: Rastteil
- **27** :: Lasche
- **28** :: Griff
- **29** :: Führungsrinne an Pos. **24**
- **30** :: Kerben in Pos. **25**
- **31** :: Bohrungen in Pos. **25**
- **32** :: Führungslaschen
- **35** :: Spannkörper
- **36** :: Pressstempel
- **37** :: Pressplatte
- **38** :: Vertikalnuten
- **39** :: Boden von Pos. **1**
- **40** :: freies Ende Pos. **1**
- **41**, **41**' :: offene Schlaufe
- **42**, **42'** :: Abschnitte
- **43**, **43**' :: Abschnitte
- **43a**, **43**'a :: Freie Enden von Pos. **43**, **43**'
- **44**, **45, 46** :: s. Beschreibung
- **P** :: Position (Ballenlänge)
- **B 1** :: erster Ballen
- **B 2** :: zweiter Ballen
- S :: Bewegungsrichtung (Schwerkraftrichtung)

## Patentansprüche

1. Ballenpresse zum Verdichten von losem Material und zum Verschnüren des verdichteten Materials zu Ballen, umfassend
- einen Presskasten (**2**), der eine Einfüllöffnung (**4**) aufweist, durch die hindurch das lose Material in den Presskasten (**2**) gelangt,
- einen ausgangsseitig des Presskastens (**2**) in horizontaler Ausrichtung folgenden Presskanal (**3**),
- einen von einer Ausgangsstellung aus durch den Presskasten (**2**) hindurch bis in die Nähe des Anfanges des Presskanals (**3**) als vorderer Stellung horizontal vor- und zurück bewegliche Pressstempel (**36**) mit vertikalen Nuten (**38**) in der Frontfläche der frontseitig am Pressstempel (**36**) angeordneten Pressplatte (**37**), sowie
- eine Umschnürungseinheit (**6**) mit aufwärts und abwärts beweglichen Zielnadeln (**10**) für das Umreifen eines fertig gepressten Ballens (B) mit Umschnürungsmaterial (**20**), wobei
- die Umschnürungseinheit (**6**) eine auf der Oberseite angeordnete Bandziehstation (**8**) und eine dazu korrespondierend unter dem Boden der Ballenpresse (**39**) angeordnete Bandleitstation (**7**) umfasst,
- die Umschnürungseinheit (**6**) außerhalb des Presskastens (**2**) im Übergangsabschnitt (**2a**) zwischen dem Presskasten (**2**) und dem Presskanal (**3**) angeordnet ist,
- die Lage der vertikalen Nuten (**38**) mit der Bewegungsrichtung der Ziehnadeln (**10**) korreliert, wenn sich die Pressplatte (**37**) in der Ballenpresse (**1**) in ihrer vorderen Stellung befindet,
- Öffnungen (**15**) zum Durchführen der Ziehnadeln (**10**) in der Pressenoberseite vorgesehen sind,
- an den freien, zum Ergreifen des Umschnürungsmaterials (**20**) vorgesehenen Enden der Ziehnadeln (**10**) jeweils ein Kopfteil (**11**) angeordnet ist, wobei die Kopfteile (**11**) an ihrem freien Endabschnitt jeweils einen Fanghaken (**12**) aufweisen,
**dadurch gekennzeichnet, dass**
- die an einem Führungsteil (**18**) der Bandziehstation (**8**) ausgebildete Gleitfläche (**18**a) und die jeweilige Führungsfläche am Kopfteil (**11**) zusammen eine Verdrehsicherung bilden,
- wobei die Länge der Gleitfläche (**18**a) so groß ist, dass das Kopfteil (**11**) bis zum Eintauchen in die jeweils führende Vertikalnut (**38**) der Pressplatte (**13**) verdrehsicher geführt ist und
- von dieser Position aus bis hinab zur unteren Position der Ziehnadel (**10**) die Sicherung gegen Verdrehen des Fanghakens (**12**) von der betreffenden vertikalen Nut (**38**) vorgenommen wird,
- sodass die an den Kopfteilen (**11**) vorgesehenen Fanghaken (**12**) von Anfang bis Ende ihrer Bewegung zum Heraufholen eines Abschnittes des Umschnürungsmaterials (**20**) stets eine definierte Lage einnehmen.

2. Ballenpresse nach Anspruch **1**, bei der jedes Kopfteil (**11**) mindestens eine ebene Fläche aufweist, die zwecks Geradführung und Verdrehsicherung in Kontakt mit gegenüberstehenden, relativ dazu ruhenden Gleitflächen steht.

3. Ballenpresse nach Anspruch **1** oder **2**, bei der die Geradführung und Verdrehsicherung der Kopfteile (**11**) vorgesehen ist
- oberhalb des Presskanals (**3**) mittels eines Führungsteils (**18**), an dem Gleitflächen (**18**a) ausgebildet sind, die den Gleitflächen an den Kopfteilen (**11**) gegenüberstehen, und
- innerhalb des Presskanals (**3**) mittels in den Pressstempel (**36**) eingearbeiteter, mit Gleitflächen versehener Vertikalnuten (**38**).

4. Ballenpresse nach einem der vorgenannten Ansprüche, bei der im Bewegungsbereich der Kopfteile (**11**)
- im Übergangsabschnitt von der Oberseite der Ballenpresse (**1**) in den Presskanal (**3**) hinein Öffnungen (**15**), und
- im Übergangsabschnitt vom Presskanal (**3**) zum Bereich unterhalb des Bodens (39) der Ballenpresse (**1**) Durchführungen (**17**) für die Kopfteile (**11**) einschließlich der Fanghaken (**12**) vorhanden sind.

5. Ballenpresse nach Anspruch **4**, bei der die Öffnungen (**15**) mit gegeneinander geneigten Führungslaschen (**16**) versehen sind, um das Hineingleiten der Kopfteile (**11**) in die jeweils zugeordnete Vertikalnut (**38**) zu erleichtern und Beschädigungen der Fanghaken (**12**) zu vermeiden.

6. Ballenpresse nach einem der vorgenannten Ansprüche, bei welcher mehrere, vorzugsweise drei Ziehnadeln (**10**) vorhanden sind, die parallel zueinander angeordnet und mit einer gemeinsamen Ansteuerung für die Ab- und Aufwärtsbewegung verbunden sind, wobei zum Antreiben der Ziehnadeln (**10**) Hydraulikzylinder (**9**) vorgesehen sind.

7. Ballenpresse nach Anspruch **6**, ausgestattet mit einer Sicherheitseinrichtung, die bezüglich der Position und Ausrichtung der Kopfteile (**11**) so ausgebildet ist, dass die Bewegung des Pressstempels (**36**) nur dann auslösbar ist, wenn sich die alle Kopfteile (**11**) in einer vorgegebenen Ruheposition oberhalb des Presskanals (3) befinden.

8. Ballenpresse nach einem der vorgenannten Ansprüche, bei der die Länge der Ballen (B) in Pressrichtung variabel ist, **gekennzeichnet durch**
- Schneidelemente (**46**) zur Auftrennung der Schlaufen (**41**, **41**') nach der Herausführung aus der Oberseite (**3**a) des Presskanals (**3**), und
- Mittel zum Vorziehen derjenigen Enden der Schlaufen (**41**, **41'**), die nach der Auftrennung mit einem Vorrat an Umschnürungsmaterial (**20**) verbundenen sind, in Pressrichtung parallel zur Oberseite (**3**a) bis zu einer Position (P), die durch eine jeweils vorgegebene Länge der Ballen (B) in Pressrichtung bestimmt ist.

## Claims

1. A baler for compressing loose material and for tying the compressed material into bales, the baler comprising:
- a press box (2) that includes a fill in opening (4) through which the loose material moves into the press box (2);
- a press channel (3) that is horizontally arranged at an outlet of the press box (2);
- a press plunger (36) with vertical grooves (38) in a front surface of the press plate (37) arranged at a front side of the press plunger (36) wherein the press plunger is movable back and forth horizontally from a starting position through the press box (2) into a proximity of a beginning of the press channel (3) which defines a front position of the press plunger,
- a tying unit (6) including upward and downward move able pull needles (10) for tying a finished pressed bale (B) with a tying material (20); wherein
- the tying unit (6) includes a band pull station (8) arranged at a top side and a band guide station (7) corresponding thereto and arranged below the base of the baler (39);
- the tying unit (6) is arranged outside of the press box (2) in a transition section (2a) between the press box (2) and the press channel (3);
- a position of the vertical grooves (38) correlates with a movement direction of the pull needles (10) when the press plate (37) in the baler (1) is arranged in a most forward position,
- openings (15) are provided in a top side of the press for pulling the pull needles (10) through;
- a respective head piece (11) is arranged at free ends of the pull needle (10) which are provided for gripping the tying material (20) wherein the head pieces (11) respectively include a catch hook (12) at their free end section,
**characterized in that**
- a sliding surface (18a) configured at a guide element (18) of the band pull station (8) and the respective support surface at the head element (11) form a rotation safety in combination;
- wherein a length of the sliding surface (18a) is large enough so that the head piece (11) is supported safe against rotation until it penetrates a respective first vertical groove (38) of the press plate (13); and
- a safety against rotation of the catch hook (12) is provided by the respective vertical groove (38) from this position down to the lower position of the pull needle (10),
- so that catch hooks (12) provided at the head pieces (11) always take a defined position from a beginning of their movement to an end of their movement for pulling up a section of the tie up material (20).

2. The baler according to claim 1, wherein each head piece (11) includes at least one flat surface which is in contact with opposite stationary sliding surfaces in order to provide straight line support and rotation safety.

3. The baler according to claim 1 or 2, wherein the straight line support and the rotation safety of the head pieces (11) is provided
- above the press channel (3) by a support element (18) which includes sliding surfaces (18a) which are arranged opposite to the sliding surfaces at the head pieces (11), and - - by vertical grooves (38) that are provided with sliding surfaces and fabricated within the press channel (3) into the press plunger (36).

4. The baler according to one of the preceding claims, wherein a movement range of the head pieces (11),
- includes openings (15) in a transition section from the top side of the baler (1) into the press channel (3), and
- pass through openings (17) for the head pieces (11) including the catch hooks (12) are provided in the transition section from the press channel (3) to the portion below the base (39) of the baler (1).

5. The baler according to claim 4, wherein the openings (15) are provided with support lobes (16) that are oriented against each other in order to facilitate a sliding of the head pieces (11) into a respectively associated vertical groove (38) and in order to prevent damaging the catch hooks (12).

6. The baler according to one of the preceding claims, in which plural, advantageously three pull needles (10) are provided that are arranged parallel to one another and connected by a common control for the downward movement and the upward movement, wherein hydraulic cylinders (9) are provided for driving the pull needles (10).

7. The baler according to claim 6, including a safety device which is configured with respect to a position and orientation of the head pieces (11) so that a movement of the press plunger (36) is only initiateable when all head pieces (11) are arranged in a predetermined resting position above the press channel (3).

8. The baler according to one of the preceding claims, wherein a length of bales (B) is variable in a pressing direction, **characterized by**,
- cutting elements (46) for cutting loops (41, 41') that are run out from a top side (3a) of the pressing channel (3), and
- devices for pulling ends of the loops (41, 41') forward, which ends are connected with a stock of envelopment material (20) after cutting, in the pressing direction parallel to the top side (3a) up to a position (P) which is defined by a predetermined length of the bales (B) in the pressing direction.

## Revendications

1. Presse à balles pour le compactage de matériau en vrac et pour le ficelage du matériau compacté en balle, comprenant
- un caisson de compression (2), qui présente une ouverture de remplissage (4), à travers laquelle parvient le matériau en vrac dans le caisson de compression (2),
- un canal de compression horizontal (3) dans le sens de la sortie du caisson de compression (2),
- un piston de compression (36) mobile entre une position de sortie à travers le caisson de compression (2) jusqu'à proximité du début du canal de compression (3) et une position avant à l'horizontale, avec une rainure verticale (38) dans la surface frontale de la plaque de compression (37) disposée sur la face frontale sur le piston de compression (36), ainsi
- qu'une unité de ficelage (6) avec des aiguilles cibles (10) pour le cerclage d'une balle compressée (B) avec du matériau de ficelage (20),
- l'unité de ficelage (4) comprenant un poste de tirage de bande (8) disposé sur la face supérieure et un poste de guidage de bande (7) disposé en dessous du fond de la presse à balles (39),
- l'unité de ficelage (6) étant disposée à l'extérieur du caisson de compresson (2) dans la section de transition (2a) entre le canal de compression (2) et le canal de compression (3),
- la position des rainures verticales (38) étant corrélée avec la direction de déplacement des aiguilles cibles (10), quand la plaque de compression (37) se trouve dans la presse à balles (1) dans sa position avant,
- des ouvertures (15) étant prévues pour le passage des aiguilles cibles (10) dans la face supérieure de la presse,
- une partie de tête (11) étant disposée respectivement sur les extrémités libres des aiguilles cibles, qui sont prévues pour saisir le matériel de ficelage (20), les parties de tête (11) présentant sur leur section libre respectivelent un crochet de capture (12), caractarisée en ce
- que la surface de glisse (18a) réalisée sur une partie de guidage (18) de poste de tirage de bande (8) et la surface de guidage respective forment ensemble sur la partie de tête (11) une sécurité anti-rotation,
- la longueur de la surface de glisse (18a) étant prévue pour que la partie de tête (11) soit guidée sans rotation jusqu'à ce qu'elle pénètre dans la rainure verticale (38) de guidage de la plaque de compression (13) et
- la sécurité anti-rotation du crochet de capture (12) est assurée par la rainure verticale concernée (38) à partir de cette position jusqu'à la position inférieure de l'aiguille cible (10),
- de sorte que les crochets de capture (12) prévus sur les parties de tête (11) prennent constamment du début à la fin de leur déplacement une position définie pour tirer vers le haut une portion du matériau de ficelage (20).

2. Presse à balles selon l'une des revendications précédentes, dans laquelle chaque partie de tête (11) présente au moins une surface plane, qui est en contact avec des surfaces de glisse opposées au repos afin d'assurer un guidage droit et une sécurité anti-rotation.

3. Presse à balles selon la revendication 1 ou 2, dans laquelle le guidage droit et la sécurité anti-rotation des parties de tête (11) sont prévus
- au-dessus du canal de compression (3) au moyen d'une partie de guidage (18) sur laquelle sont réalisées des surfaces de glisse (18a) qui sont opposées aux surfaces de glisse sur les parties de tête (11), et
- à l'intérieur du canal de compression (3) au moyen de rainures verticales (38) munies de surfaces de glisse ménagées dans le piston de compression (36).

4. Presse à balles selon l'une des revendications précédentes, dans laquelle Il est prévu dans la zone de déplacement des parties de tête (11)
- des ouvertures (15) dans la section de transition de la face supérieure de la presse à balles (1) à l'intérieur du canal de compression (3), et
- des passages (17) pour les parties de tête (11) y compris les crochets de capture (12) dans la section de transiton du canal de compression (3) vers la zone en dessous du fond (39) de la presse à balles.

5. Presse à balles selon la revendication 4, dans laquelle les ouvertures (15) sont munies de languettes de guidage (16) inclinées les unes vers les autres pour faciliter le glissement des parties de tête (11) dans la rainure verticale associée (38) et éviter d'endommager les crochets de capture (12).

6. Presse à balles selon l'une des revendications précédentes, dans laquelle plusieurs de préférence trois aiguilles cibles (10) sont disposées parallélement entre elles et sont reliées par une commande commune pour le déplacement ascendant et descendant, des vérins hydraulyques (9) étant prévus pour l'entraînement des aiguilles cibles (10).

7. Presse à balles selon la revendication 6, munie d'un dispositif de sécurité qui est réalisé par rapport à la position et l'orientation des parties de tête (11) de sorte que le déplacement du piston de compression (36) ne peut être déclenché que quand toutes les parties de tête (11) se trouvent dans une position de repos prescrite en amont du canal de compression (3).

8. Presse à balles selon l'une des revendications précédentes, dans laquelle la longueur des balles (B) est variable dans la direction de compression, **caractérisée par**
- des éléments de coupe (46) pour le sectionnement des boucles (41, 41) après la sortie hors de la face supérieure (3a) du canal de de compression (3), et
- des moyens pour tirer les extrémités des boucles (41, 41'), qui sont reliées après le sectionnement à une réserve de matériau de ficellage (20) dans la direction de compression parallèment à la face supérieure (3a) jusqu'à une position (P) qui est définie par une longueur prédéterminée respective des balles (B) dans la direction de compression.
